(19)

Europäisches
Patentamt
European
Patent Office
Office européen
des brevets

(11) **EP 1 391 949 B1**

(12) **EUROPEAN PATENT SPECIFICATION**

(45) Date of publication and mention
of the grant of the patent:
**16.03.2011 Bulletin 2011/11**

(51) Int Cl.:
*H01M 4/48* (2010.01)      *H01M 4/50* (2010.01)
*C01G 45/00* (2006.01)

(21) Application number: **03011081.1**

(22) Date of filing: **20.05.2003**

(54) **Positive electrode active material for a nonaqueous electrolyte secondary battery**

Pluspol-Aktivmaterial für nicht-wässrige Elektrolyt-Sekundärzelle

Materiau actif d'électrode positive pour pile secondaire à électrolyte non-aqueux

(84) Designated Contracting States:
**AT BE BG CH CY CZ DE DK EE ES FI FR GB GR
HU IE IT LI LU MC NL PT RO SE SI SK TR**

(30) Priority: **20.05.2002   JP 2002145377
25.04.2003   JP 2003122165**

(43) Date of publication of application:
**25.02.2004   Bulletin 2004/09**

(73) Proprietor: **Nichia Corporation
Anan-shi,
Tokushima (JP)**

(72) Inventors:
 • **Kobayashi, Kenichi
Anan-shi,
Tokushima (JP)**
 • **Nakano, Yoko
Anan-shi,
Tokushima (JP)**

(74) Representative: **Vossius & Partner
Siebertstrasse 4
81675 München (DE)**

(56) References cited:
**EP-A- 1 142 834      US-A- 6 080 510**

 • **PATENT ABSTRACTS OF JAPAN vol. 2000, no.
19, 5 June 2001 (2001-06-05) & JP 2001 048547 A
(NIKKI CHEMCAL CO LTD), 20 February 2001
(2001-02-20)**
 • **TAKAHARA H ET AL: "Particle analyzer system"
INSTRUMENTATION AND MEASUREMENT
TECHNOLOGY CONFERENCE, 1994. IMTC/94.
CONFERENCE PROCEEDINGS. 10TH
ANNIVERSARY. ADVANCED TECHNOLOGIES IN
I & M., 1994 IEEE HAMAMATSU, JAPAN 10-12
MAY 1994, NEW YORK, NY, USA,IEEE, 10 May
1994 (1994-05-10), pages 833-836, XP010121955
ISBN: 0-7803-1880-3**

EP 1 391 949 B1

**Description**

The present invention relates to a positive electrode active material for a nonaqueous electrolyte secondary battery such as a lithium ion secondary battery (hereinafter also referred to simply as "positive electrode active material"). More particularly, the present invention relates to a positive electrode active material having a lithium-transition metal composite oxide of the spinel structure and being excellent in cycle charge/discharge characteristics (cycle characteristics), storage characteristics, load characteristics and the like.

Nonaqueous electrolyte secondary batteries such as lithium ion secondary batteries have been widely used as power sources for mobile electronic appliances represented by cellular phones and laptop personal computers. Further, recently, their application to high capacity power sources such as batteries for electric vehicles is expected.

At present, mobile electronic appliances such as cellular phones are imparted with various functions and accordingly, further improvement in load characteristics is required for nonaqueous electrolyte secondary batteries used as a power source.

Further, in the case where a nonaqueous electrolyte secondary battery is utilized in an electric vehicle, the battery is required to have a service life of 5 years or longer, which means that the cycle characteristics thereof must be improved. Furthermore, in this case, a high current must be discharged, which leads to the requirement of further improvement in load characteristics.

A nonaqueous electrolyte secondary battery is featured to have a high operating voltage and a high energy density as compared with a conventional nickel-cadmium secondary battery and the like, and has been widely used as a power source for electronic appliances. A positive electrode active material of the nonaqueous electrolyte secondary battery includes lithium transition metal composite oxides represented by $LiMn_2O_4$, $LiCoO_2$ and $LiNiO_2$.

Among these, $LiMn_2O_4$ has a problem that it generates gas upon charge and discharge, causing a battery to swell. Also, it has a problem that no cycle characteristics of a practical level can be obtained. Since these problems arise remarkably at high temperatures, utility in, for example, mobile electronic appliances and the like could not be put into practice up to now as their use are expected at high temperatures.

One cause of the above-mentioned problems is elution of manganese ions from the crystal structure of $LiMn_2O_4$ into the electrolyte upon the charge and discharge. Hereinafter, a detailed description thereon will be made.

The manganese ions eluted into the electrolyte are deposited on a surface of the negative electrode and interfere with insertion of lithium ions into a negative electrode material and release of lithium ions from the negative electrode material, leading to an increase in internal resistance. As a result, charge and discharge are repeatedly conducted, causing a decrease in discharge capacity.

Also, the elution of manganese ions from $LiMn_2O_4$ crystal that constitutes the positive electrode into the electrolyte is accompanied by denaturation and deterioration of the positive electrode and electrolyte. Such denaturation and deterioration of the materials that constitute the battery will cause a decrease in the cycle characteristics.

Furthermore, there is a hypothesis that the manganese ions eluted into the electrolyte promote decomposition reaction of ester compounds in the electrolyte. The decomposition of the ester compounds generates a gas such as $CO_2$ to cause swelling of the battery.

It is known that the elution of the manganese ions occurs not only when charge and discharge are performed but also when the battery is simply left to stand.

US-A-6,080,510 relates to ternary mixed lithium oxides, in particular to doped lithium manganese oxides having a spinel-type crystal structure. Said document further relates to a process for preparing ternary mixed lithium oxides and to their use, in particular as a cathode material in secondary lithium batteries.

The inventors of the present invention have conceived that if the elution of manganese ions in a positive electrode active material with $LiMn_2O_4$ can be successfully suppressed, improvement of discharge capacity, improvement of cycle characteristics and prevention of swelling of the battery can be achieved.

Also, the positive electrode active material is preferably one that has excellent storage characteristics, i.e., causes no elution of manganese ions, even during storage of a nonaqueous electrolyte secondary battery.

Furthermore, what is described above is similarly applicable not only to $LiMn_2O_4$ that uses manganese as a transition metal but also to a lithium-transition metal composite oxide of the spinel structure that uses another transition metal (for example, titanium).

Therefore, an object of the present invention is to provide a positive electrode active material for a nonaqueous electrolyte secondary battery having at least a lithium-transition metal composite oxide of the spinel structure, in which electrode characteristics, in particular cycle characteristics, load characteristics, storage characteristics and the like are excellent, and less swelling of the battery is caused.

The object of the invention is achieved with the features of the claims.
(1) A positive electrode active material for a nonaqueous electrolyte secondary battery having at least a lithium-manganese composite oxide of the spinel structure,
wherein the lithium-manganese composite oxide exists in a form of particles consisting of one or both of primary particles and secondary particles that are aggregations of the primary particles,

wherein assuming that each of the particles is given a two-dimensional coordinate having as coordinate components cubic roots of luminescence voltage values ascribable to a manganese and lithium to represent the respective particles by points in a coordinate plane, and that a primary regression line passing an origin is obtained, a mean absolute deviation of an error of each of the points with respect to the primary regression line is 0.25 or less.

In other words, the present invention provides a positive electrode active material for a nonaqueous electrolyte secondary battery having at least a lithium-manganese composite oxide of the spinel structure, wherein assuming that a cubic root of luminescence voltage ascribable to the manganese of a lithium-manganese composite oxide particle is taken as a value X, a cubic root of luminescence voltage ascribable to lithium in the lithium-manganese composite oxide particle is taken as a value Y, and that the values X and Y are primarily regressed with respect to a line passing an origin to obtain an approximate line, mean absolute deviations of errors of lithium-manganese composite oxide particles with respect to the approximate line are each 0.25 or less.

The inventors of the present invention have made extensive studies with a view of achieving the above-mentioned object, and as a result, they have found that decreasing unevenness in a compositional ratio of lithium-manganese composite oxide of the spinel structure among particles suppresses elution of manganese ions, thereby improving the cycle characteristics and storage characteristics of the battery while suppressing swelling thereof.

The inventors of the present invention have further found the following. That is, assuming that each of the particles of a lithium-manganese composite oxide is given a two-dimensional coordinate having as coordinate components cubic roots of luminescence voltage values ascribable to the manganese and lithium to represent the respective particles by points in a coordinate plane and that a primary regression line passing an origin is obtained, unevenness in a compositional ratio of the lithium-manganese composite oxide among particles can be expressed by a mean absolute deviation of an error of each of the points with respect to the primary regression line. In addition, when the above-mentioned mean absolute deviation of error is 0.25 or less, elution of the manganese ions is suppressed to such an extent that the cycle characteristics, the storage characteristics, and the swelling of the battery become practically acceptable levels.

Thus, the inventors of the present invention have completed the positive electrode active material described above in (1) based on these findings.

Also, according to the findings of the inventors of the present invention, it is considered that by reducing unevenness in compositional ratio among particles and increasing uniformity of the compositional ratio on the level of particle, insertion and release of lithium ions in the whole positive electrode occur evenly, so that there occurs no unevenness in current density, thereby increasing the load characteristics.

Further, according to the findings of the inventors of the present invention, by suppressing unevenness in compositional ratio among particles and increasing uniformity of the compositional ratio on the level of particle, discharge potential becomes high and capacity maintenance ratio is improved under load, thereby increasing the output characteristics.

(2) The positive electrode active material for a nonaqueous electrolyte secondary battery as described above in (1), wherein assuming that particle sizes whose volume cumulative frequencies reaching 10%, 50% and 90%, respectively, are defined as D10, D50 and D90 in a particle size distribution of the particles, all of the following conditions are met.

$$0.1 \leq (D10/D50) < 1$$

$$1 < (D90/D50) \leq 3$$

$$5 \ \mu m \leq D50 \leq 40 \ \mu m$$

The inventors of the present invention have found that a polar plate density at which the positive electrode active material of the present invention is coated on a positive plate can be increased to thereby increase charge-discharge capacity per unit volume of the battery without deteriorating the cycle characteristics, storage characteristics, load characteristics, and output characteristics and without deteriorating suppression of swelling of the battery by not only decreasing the unevenness in compositional ratio among particles but also controlling the unevenness in size among particles. Furthermore, they have found that if a positive electrode active material satisfies a specified relational expression relative to volume cumulative frequency in a particle size distribution, then improvements in the cycle characteristics, storage characteristics, load characteristics, and output characteristics and improvement in the polar plate density of the battery can be balanced therebetween. Thus, they have completed the positive electrode active material described above in (2) based on these findings.

(3) The positive electrode active material for a nonaqueous electrolyte secondary battery as described above in (1) or (2), wherein in a particle size distribution of the particles, a standard deviation of a particle size is 0.4 or less.

The inventors of the present invention have also found that improvements in cycle characteristics, storage characteristics, load characteristics, and output characteristics and improvement in polar plate density can also be balanced therebetween by setting standard deviation of particle size to 0.4 or less, and they have completed the positive electrode active material as described above in (3).

If manganese is used, the nonaqueous electrolyte secondary battery with the positive electrode active material of the present invention has excellent cycle characteristics, storage characteristics, and load characteristics, so that it can be used particularly advantageously for cellular phones, electrically powered tools and the like. Also, it has excellent output characteristics, so that it can be used particularly advantageously for electric vehicles.

(4) A positive electrode active material for a nonaqueous electrolyte secondary battery as described above in (1) to (3), wherein the lithium-manganese composite oxide is a lithium-manganese composite oxide containing aluminum and/or magnesium, and boron.

The inventors of the present invention have found that use of a lithium-manganese composite oxide in which a portion of manganese in lithium manganate has been substituted by magnesium enables stabilization of the crystal structure, thereby further increasing the cycle characteristics and further suppressing the swelling of the battery without deteriorating the storage characteristics, load characteristics and output characteristics.

Also, the inventors of the present invention have found that boron acts as a flux to increase the crystallinity and hence addition of boron further increases the cycle characteristics without deteriorating the storage characteristics, load characteristics and output characteristics.

The inventors of the present invention have completed the positive electrode active material as described above in (4) based on these findings.

(5) The positive electrode active material for a nonaqueous electrolyte secondary battery as described above in (3), wherein the lithium-manganese composite oxide is represented by a general formula $Li_{1+a}Mg_bMn_{2-a-b}B_cO_{4+d}$ (where a represents a number that satisfies $-0.2 \leq a \leq 0.2$, b represents a number that satisfies $0 \leq b \leq 0.2$, c represents a number that satisfies $0 \leq c \leq 0.02$, and d represents a number that satisfies $-0.5 \leq d \leq 0.5$).

Further, the inventors of the present invention have found the following.

That is, to suppress elution of manganese ions, it is effective to increase a Li/Mn molar ratio. However, as the Li/Mn molar ratio is increased, the charge-discharge capacity is decreased. In addition, if the compositional ratio of the lithium-manganese composite oxide has great unevenness among particles, elution of manganese ions from particles with small Li/Mn molar ratio takes place even when the Li/Mn molar ratio of the average composition is increased.

In the positive electrode active material as described above in (1), elution of manganese ions is suppressed by decreasing the unevenness in compositional ratio among particles. This can adjust the Li/Mn molar ratio to be within the range where the elution of manganese ions can be effectively suppressed without decreasing the charge-discharge capacity.

The inventors of the present invention have determined a suitable range of Li/Mn molar ratio based on these findings and completed the positive electrode active material as described above in (5). Accordingly, the positive electrode active material as described above in (5) has excellent cycle characteristics; load characteristics, storage characteristics, and charge-discharge capacity while causing less swelling of the battery.

(6) The positive electrode active material for a nonaqueous electrolyte secondary battery as described above in any one of (1) to (5), wherein (400) crystallite diameter of the lithium-manganese composite oxide is 600 to 1,200 Å.

If the (400) crystallite diameter is 600 to 1,200 Å, more excellent cycle characteristics can be realized without deteriorating the storage characteristics, load characteristics and output characteristics.

(7) The positive electrode active material for a nonaqueous electrolyte secondary battery as described above in any one of (1) to (7), wherein a specific surface area is 0.2 to 1.2 $m^2$/g.

If the specific surface area is 0.2 to 1.2 $m^2$/g, the swelling ratio of the battery can be further suppressed without deteriorating the cycle characteristics, storage characteristics, load characteristics, and output characteristics.

(8) The positive electrode active material for a nonaqueous electrolyte secondary battery as described above in any one of (1) to (7), wherein in a particle size distribution of the particles, a ratio of particles having a volume-based particle size of 50 $\mu$m or more is 10 vol% or less based on total particles.

In the particle size distribution of the particles, if the volume-based ratio of particles having a particle size of 50 $\mu$m or more is 10 vol% or less based on the total particles, a coated surface of a positive electrode having excellent smoothness can be obtained without deteriorating the cycle characteristics, storage characteristics, load characteristics, and output characteristics.

As will be described hereinbelow, use of the positive electrode active material of the present invention enables improvement of the battery characteristics such as cycle characteristics, load characteristics, and storage characteristics. This results in commercialization of a nonaqueous electrolyte secondary battery having excellent battery characteristics that could not have been achieved conventionally, and which is applicable to various fields.

Fig. 1 is a scattering drawing illustrating the distribution of (X,Y) in which X is a cubic root of the luminescence voltage value ascribable to a manganese atom and Y is a cubic root of the luminescence voltage ascribable to a lithium atom in a lithium-manganese composite oxide particle of the positive electrode active material of the present invention (Example 1).

Fig. 2 is a scattering drawing illustrating the distribution of (X,Y) in which X is a cubic root of the luminescence voltage value ascribable to a manganese atom and Y is a cubic root of the luminescence voltage ascribable to a lithium atom in a lithium-manganese composite oxide particle of the positive electrode active material for a conventional lithium ion secondary battery (Comparative Example 1).

Fig. 3 is an explanatory view for illustrating how to concretely obtain an error of each point with respect to a primary regression line.

Fig. 4 is a schematic diagram showing the crystal structure of a lithium-transition metal composite oxide of the spinel structure.

Fig. 5 is a schematic sectional view showing a positive electrode.

Fig. 6 is a schematic sectional view showing a cylinder type battery.

Fig. 7 is a schematic fragmentary sectional view showing a coin type battery.

Fig. 8 is a schematic perspective view showing a square type battery.

Fig. 9 is a chart illustrating the state of existence of magnesium, obtained by line analysis by EPMA on the positive electrode active material obtained in Example 1.

Fig. 10 is a chart illustrating the state of existence of magnesium, obtained by line analysis by EPMA on the positive electrode active material obtained in Comparative Example 2.

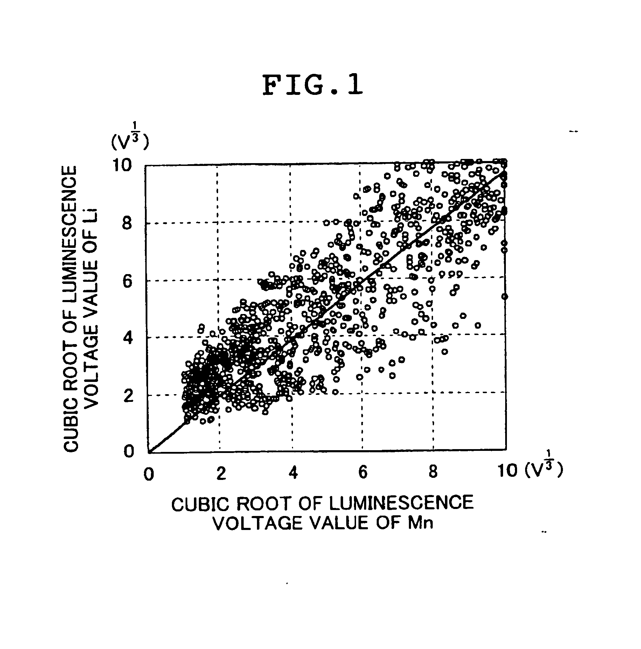

Hereinafter, the positive electrode active material of the present invention will be described in more detail by embodiments, examples and Figs. 1 to 10. However, the present invention should not be considered to be limited to the embodiments, the examples and Figs. 1 to 10.

(Positive electrode active material for a nonaqueous electrolyte secondary battery)

The positive electrode active material of the present invention includes at least a lithium-transition metal composite oxide of a spinel structure (spinel type crystal structure). "Spinel structure" is one of representative crystal structure types found in compounds that are composite oxides and are of the $AB_2O_4$ type (where A and B represent metal atoms).

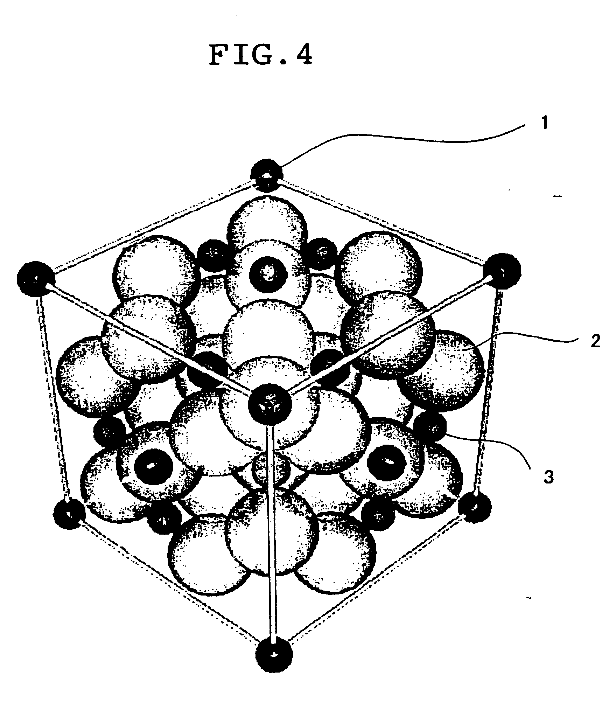

Fig. 4 is a schematic diagram showing a crystal structure of a lithium-transition metal composite oxide of the spinel structure. In Fig. 4, lithium atoms 1 occupy the 8a sites which are tetrahedral sites, oxygen atoms 2 occupy the 32e sites, and transition metal atoms 3 (and optionally, excess lithium atoms) occupy the 16d sites which are octahedral sites.

The lithium-transition metal composite oxide of the spinel structure includes lithium-manganese composite oxide, lithium-titanium composite oxide, and so forth. Among them, lithium-manganese composite oxide is preferable.

In the positive electrode active material of the present invention, the lithium-transition metal composite oxide exists in the form of primary particles, or secondary particles that are aggregations of the primary particles, or both. That is, the lithium-transition metal composite oxide exists in the form of particles, which may consist of primary particles, or secondary particles that are aggregations of the primary particles, or both of the primary and secondary particles.

In the positive electrode active material of the present invention, assuming that each of the particles is given a two-dimensional coordinate having as coordinate components cubic roots of luminescence voltage values ascribable to a transition metal and lithium to represent the respective particles by points in a coordinate plane, and that a primary regression line passing an origin is obtained, a mean absolute deviation of an error of each of the points with respect to the primary regression line is 0.25 or less. Hereinafter, this will be described in more detail.

The term "luminescence voltage value" refers to a value obtained by introducing particles of a lithium-transition metal composite oxide into microwave plasma to decompose the particles into atoms and excite the atoms, and then detecting emission spectra that are emitted from the excited atoms as voltage. In the present invention, luminescence voltage values ascribable to transition metal atom and lithium atom, respectively, are obtained for each particle of the lithium-transition metal composite oxide.

Hereinafter, the present invention will be described in more detail by referring to the method actually practiced by the inventors of the present invention. First, elemental analysis of manganese and lithium was performed on several thousands to several ten thousands of particles of the positive electrode active materials of Example 1 and Comparative Example 1 described hereinbelow using a fine particle component analyzing apparatus (Particle Analyzer PT1000, manufactured by Yokogawa Electric Corporation). For manganese, channel 2 of the detector of the apparatus was used and the emission spectra at a light emission wavelength of 257.610 nm were measured in a high voltage power source magnification of 1.00. For lithium, channel 3 of the detector of the apparatus was used and the emission spectra at a light emission wavelength of 670.780 nm were measured in a high voltage power source magnification of 0.75. Note that in the present invention, the analyzing apparatus is not particularly limited to the above-mentioned apparatus but an apparatus that performs elemental analysis of particles by light emission voltage of each element by use of microwave plasma may also be used.

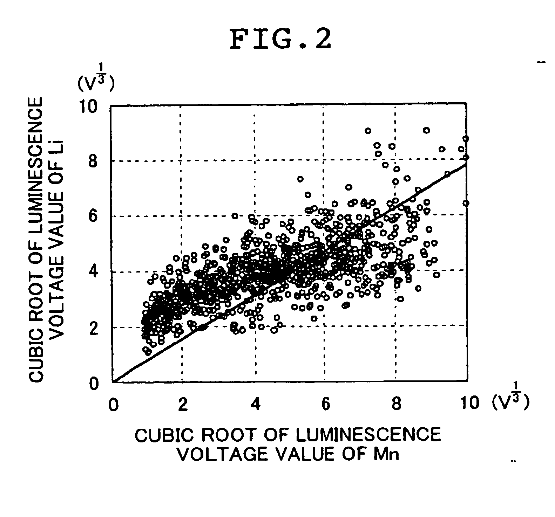

Assuming that a cubic root of the obtained luminescence voltage value ascribable to manganese atoms is the value X and a cubic root of the obtained luminescence voltage value ascribable to lithium atoms is the value Y, each of the particles was given a two-dimensional coordinate (X,Y) that has these values as coordinate components, respectively so that each particle could be represented by a point in a coordinate plane. Fig. 1 is a scatter diagram showing the distribution of (X,Y) for Example 1 and Fig. 2 is a scatter diagram showing the distribution of (X,Y) for Comparative Example 1. Note that the particles at Y=0 and/or X=0 were excluded as particles outside the measuring limit. The ratio of the value X and the value Y at each point represents the ratio of lithium and manganese contents in each particle of the lithium-manganese composite oxide.

Then, a primary regression line (approximate line) passing an origin represented by the equation: $Y = aX$ (where a is a constant) was obtained by the least squares method. The obtained primary regression line is illustrated in Figs. 1 and 2.

Furthermore, mean absolute deviation of error of each point with respect to the primary regression line was obtained as described hereinbelow. In Figs. 1 and 2, a directed distance, which is positive when a point is above the approximate line and negative when it is below the approximate line, between each point and an intersection point of a perpendicular line passing each point with the primary regression line is defined as "d" and the distance between the above-mentioned intersection point and an intersection point of a perpendicular line passing the above-mentioned intersection point with the X-axis, is defined as "H". Then, an error e is expressed by the following equation (1):

$$e = d/H \qquad (1)$$

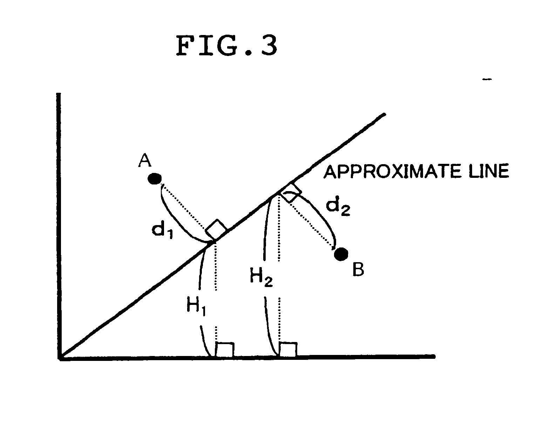

Fig. 3 is an explanatory view specifically explaining how to obtain an error of each point with respect to a primary regression line. In Fig. 3, distances between point A and point B and intersection points of perpendicular lines passing the points A and B, respectively, with an approximate line are defined as $d_1$ (>0) and $d_2$ (<0), respectively, and the lengths of perpendicular lines to the X-axis from the intersection points of the approximate line with the perpendicular lines that were drawn to the approximate line are defined as $H_1$ and $H_2$, respectively. Then, errors $e_1$ and $e_2$ are expressed by the equations: $e_1 = d_1/H_1$ (>0), and $e_2 = d_2/H_2$ (<0), respectively.

Here, the mean absolute deviation of an error is expressed by the following equation (2):

$$E = (1/n)\Sigma|e-e'| \qquad (2)$$

In the equation (2) above, n represents the number of measured particles, and e' represents an average value of errors. The mean absolute deviation E of errors varies in the range of $0 \leq E \leq 1$.

In the case of the positive electrode active material of the present invention, the above-mentioned mean absolute deviation of errors is 0.25 or less, preferably 0.22 or less. When the mean absolute deviation of errors is in the above-mentioned range, the cycle characteristics, load characteristics, storage characteristics and charge-discharge capacity become excellent and the swelling of the battery is suppressed without excessively increasing the Li/Mn molar ratio.

On the other hand, if the mean absolute deviation of errors is too large, the compositional ratio of the lithium-manganese composite oxide has unevenness among particles, which readily causes elution of manganese ions from particles with small Li/Mn molar ratio. As a result, the cycle characteristics and storage characteristics are decreased and in some cases the swelling of the battery also occurs.

In the present invention, the above-mentioned effects are each realized by controlling the compositional ratio of each particle based on the mean absolute deviation of errors.

In the present invention, assuming that particle sizes whose volume cumulative frequencies reaching 10%, 50% and 90%, respectively, are defined as D10, D50 and D90 in a particle size distribution of the particles, it is preferred that all of the following conditions be satisfied:

$$0.1 \leq (D10/D50) < 1$$

$$1 < (D90/D50) \leq 3$$

$$5 \ \mu m \leq D50 \leq 40 \ \mu m$$

Setting D10, D50 and D90 so as to satisfy the above-mentioned relational expressions enables further improvement of the polar plate density of the battery without deteriorating the cycle characteristics, storage characteristics, load characteristics and output characteristics and without deteriorating the effect of suppressing swelling of the battery.

Further, D10, D50 and D90 are expressed by more preferable relational expressions depending on the purpose and usage. For example, in order to further increase the polar plate density, it is preferable that all of the following relational expressions be satisfied:

$$0.2 \leq (D10/D50) \leq 0.9$$

$$1.2 \leq (D90/D50) \leq 2$$

$$7 \ \mu m \leq D50 \leq 30 \ \mu m$$

Furthermore, in order for a nonaqueous electrolyte secondary battery with the positive electrode active material of the present invention to be used advantageously in a fixed manner such as for housing, household, etc., it is preferred that all of the following relational expressions be satisfied:

$$0.7 \leq (D10/D50) < 1$$

$$1 < (D90/D50) \leq 1.3$$

$$7 \ \mu m \leq D50 \leq 15 \ \mu m$$

In this case, the cycle characteristics, storage characteristics, load characteristics and output characteristics are particularly excellent.

Furthermore, in order for a nonaqueous electrolyte secondary battery with the positive electrode active material of the present invention to be used advantageously for cellular phones, electrically powered tools, electric vehicles, etc., it is preferred that all of the following relational expressions be satisfied:

$$0.2 \leq (D10/D50) \leq 0.7$$

$$1.3 \leq (D90/D50) \leq 2$$

$$15 \ \mu m \le D50 \le 36 \ \mu m$$

In this case, the cycle characteristics, storage characteristics, load characteristics and output characteristics are particularly excellent, and the polar plate density is still more excellent.

In the present invention, the method for measuring the particle distribution of particles includes, for example, a sifting method, an image analysis method, a sedimentation method, a laser diffraction scattering method, and an electric detection method.

In the particle distribution of particles of the positive electrode active material of the present invention, the standard deviation of particle size is preferably 0.4 or less, and more preferably, 0.36 or less. Further, it is preferably 0.07 or more. If the standard deviation of particle size is in the above-mentioned range, the polar plate density can be increased without deteriorating the cycle characteristics, storage characteristics, load characteristics, and output characteristics.

In the positive electrode active material of the present invention, the transition metal is preferably manganese. If the transition metal is manganese, a nonaqueous electrolyte secondary battery with the positive electrode active material of the present invention has a particularly excellent cycle characteristics, storage characteristics and load characteristics, so that it can be used particularly advantageously in cellular phones, electrically powered tools and the like. Further, since the battery is also excellent in output characteristics, it can be used particularly advantageously for use electric vehicles too.

In the positive electrode active material of the present invention, preferred embodiments of the lithium-transition metal composite oxide include embodiments (i) to (viii) given below.

(i) An embodiment in which the lithium-transition metal composite oxide is a lithium-manganese composite oxide containing magnesium, and boron.

The embodiment (i) exhibits an excellent cycle characteristics, load characteristics, storage characteristics and charge-discharge capacity and causes less swelling of the battery. The reasons therefor will be described below.

When the lithium-transition metal composite oxide contains magnesium, the crystal structure of the composite oxide is stabilized so that a nonaqueous electrolyte secondary battery with such composite oxide has an excellent cycle characteristics without deteriorating the storage characteristics, load characteristics and output characteristics and further suppresses the swelling of the battery. Further, boron serves as a flux to accelerate crystal growth, and in addition, improves the cycle characteristics and storage characteristics.

In the embodiment (i), assuming that the compositional ratio of Li, Mn and O in the lithium-manganese composite oxide is expressed by the general formula $Li_{1+a}Mn_{2-a}O_{4+d}$, it is preferable that a represents a number that satisfies $-0.2 \le a \le 0.2$, and d represents a number that satisfies $-0.5 \le d \le 0.5$. The same will do in the embodiments (iii), (v) and (vii) described hereinbelow.

a is preferably larger than 0 and it is preferably 0.15 or less. A synergistic effect between lithium in an amount excessive to the stoichiometric ratio and aluminum and/or magnesium is considered to further stabilize the crystal structure of the composite oxide, thereby further improving the cycle characteristics of a nonaqueous electrolyte secondary battery with the composite oxide.

(ii) An embodiment in which the lithium-transition metal composite oxide is represented by the general formula $Li_{1+a}M_bMn_{2-a-b}B_cO_{4+d}$ (where M represents magnesium, a represents a number that satisfies $-0.2 \le a \le 0.2$, b represents a number that satisfies $0 < b \le 0.2$, c represents a number that satisfies $0 \le c \le 0.02$, and d represents a number that satisfies $-0.5 \le d \le 0.5$).

The embodiment (ii) has excellent cycle characteristics, load characteristics, storage characteristics and charge-discharge capacity as well as less swelling of the battery.

In the embodiment (ii), a is preferably larger than 0. It is considered that substitution of a portion of manganese with lithium improves the cycle characteristics.

In the embodiment (ii), b is larger than 0, more preferably 0.05 or more. If the composite oxide contains magnesium, the crystal structure thereof is stabilized, so that the cycle characteristics of a nonaqueous electrolyte secondary battery with such composite oxide become excellent without deteriorating the storage characteristics, load characteristics and output characteristics, while further suppressing the swelling of the battery. On the other hand, b is preferably 0.15 or less. If b is too large, the discharge capacity of the battery is decreased.

In the embodiment (ii), c is preferably larger than 0 and more preferably, 0.001 or more. Boron serves as a flux to accelerate crystal growth and further improves the cycle characteristics and storage characteristics of the battery. In addition, c is preferably 0.01 or less. If c is too large, the cycle characteristics of the battery are decreased.

(iii) An embodiment in which the lithium-transition metal composite oxide is a lithium-manganese composite oxide that contains magnesium; at least one member selected from the group consisting of fluorine, chlorine, bromine and iodine; and boron.

Halogens have an effect of making the lithium-manganese composite oxide powder become a spherical powder with a uniform particle size. This results in formation of a positive electrode coated surface having excellent surface smoothness, low internal resistance and excellent bindability without deteriorating the cycle characteristics, storage characteristics, load characteristics and output characteristics. The halogen is preferably fluorine and/or chlorine.

(iv) An embodiment in which the lithium-transition metal composite oxide is represented by the general formula $Li_{1+a}M_cMn_{2-a-c}O_4 \cdot Li_bX_dB_eO_f$ (where M represents magnesium, X represents at least one member selected from the group consisting of fluorine, chlorine, bromine and iodine, a represents a number that satisfies $0 < a \leq 0.1$, b represents a number that satisfies $0 \leq b \leq 0.1$, c represents a number that satisfies $0 < c \leq 0.2$, d represents a number that satisfies $0 < d \leq 0.05$, and e represents a number that satisfies $0 < e \leq 0.02$, and f represents a number that satisfies $0 \leq f < 0.1$).

In the embodiment (iv), it is preferable that the lithium-transition metal composite oxide be constituted by a cubic lithium-manganese composite oxide of the spinel type represented by $Li_{1+a}M_cMn_{2-a-c}O_4$ and an impurity phase composed of at least one compound represented by $Li_bX_dB_eO_f$.

In the embodiment (iv), a is preferably 0.02 or more, and preferably 0.08 or less. This is for the same reason as in the case of the embodiment (ii).

In the embodiment (iv), X is preferably fluorine and/or chlorine. d is preferably 0.01 or more, and preferably 0.03 or less. This is for the same reason as in the case of the embodiment (iii).

In the embodiment (iv), e is preferably 0.001 or more, and preferably 0.01 or less. This is for the same reason as in the case of the embodiment (ii). (v) An embodiment in which the lithium-transition metal composite oxide is a lithium-manganese composite oxide that contains magnesium; at least one member selected from the group consisting of fluorine, chlorine, bromine and iodine; boron; and sulfur.

In the embodiment (v), existence of sulfur improves the conductivity of electrons, so that the cycle characteristics and load characteristics of the battery are further improved.

The content of sulfur is preferably 0.03 to 0.3 wt% based on the sum of the weights of the lithium-transition metal composite oxide and sulfur. If the content of sulfur is less than 0.03 wt%, the resistance to electron migration is in some cases difficult to be decreased, while if the content of sulfur is more than 0.3 wt%, the swelling of the battery due to absorption of moisture may occur.

Sulfur may exist in any form. For example, it may exist in the form of a sulfate group.

The sulfate group includes a sulfate ion and a group of atoms obtained by removing the charge from a sulfate ion as well as a sulfo group. It is preferable that the sulfate group be based on at least one member selected from the group consisting of alkali metal sulfates, alkaline earth metal sulfates, and organic sulfates as well as organic sulfonic acids and salts thereof.

In particular, it is preferable that the sulfate group be based on at least one member selected from the group consisting of alkali metal sulfates and alkaline earth metal sulfates, and more preferably alkali metal sulfates. This is because they consist of combinations of a strong acid with a strong base and thus are chemically stable.

In the embodiment (v), the reason that those elements other than sulfur are contained is the same as in the embodiments (i) to (iv).

In the embodiment (v), the respective elements contained enables to give rise to a positive plate having a high charge-discharge capacity, excellent bindability and surface smoothness due to the synergistic effect among the elements.

(vi) An embodiment in which the lithium-transition metal composite oxide is represented by the general formula $Li_{1+a}M_bMn_{2-a-b}X_cB_dS_eO_{4+f}$ (where M represents magnesium, X represents at least one member selected from the group consisting of fluorine, chlorine, bromine and iodine, a represents a number that satisfies $-0.2 \leq a \leq 0.2$, b represents a number that satisfies $0 < b \leq 0.2$, c represents a number that satisfies $0 \leq c \leq 0.05$, d represents a number that satisfies $0 < d \leq 0.02$, e represents a number that satisfies $0 \leq e \leq 0.1$, and f represents a number that satisfies $-0.5 \leq f \leq 0.5$).

In the embodiment (vi), e is preferably more than 0. This is for the same reason as in the case of the embodiment (v).

Further, e is preferably 0.0017 or more, and preferably 0.02 or less. If e is too small, the resistance to electron migration is in some cases decreased. If e is too large, the swelling of the battery due to adsorption of moisture may occur.

The other points are the same as those in the embodiment (v).

(vii) An embodiment in which the lithium-transition metal composite oxide is a lithium-manganese composite oxide that contains magnesium; at least one member selected from the group consisting of fluorine, chlorine, bromine and iodine; boron; sulfur; and sodium and/or calcium.

In the embodiment (vii), because of the inclusion of sodium and/or calcium in the composite oxide, the elution of manganese ion can be further suppressed due to the synergistic effect of boron (preferably boron and sulfur), so that an excellent cycle characteristics of a battery on a practically acceptable level can be realized.

In the embodiment (vii), the reason that those elements other than sodium and/or calcium are contained is the same as that in the embodiments (i) to (vi).

(viii) An embodiment in which the lithium-transition metal composite oxide is represented by the general formula

$Li_{1+a}M_bMn_{2-a-b}X_cB_dS_eA_gO_{4+f}$ (where M represents magnesium, X represents at least one member selected from the group consisting of fluorine, chlorine, bromine and iodine, A represents sodium and/or calcium, a represents a number that satisfies $-0.2 \leq a \leq 0.2$, b represents a number that satisfies $0 < b \leq 0.2$, c represents a number that satisfies $0 \leq c \leq 0.05$, d represents a number that satisfies $0 < d \leq 0.02$, e represents a number that satisfies $0 \leq e \leq 0.1$, f represents a number that satisfies $-0.5 \leq f \leq 0.5$, and g represents a number that satisfies $0.00004 \leq g \leq 0.015$).
The reason that the embodiment (viii) is preferable is the same as that in the embodiment (vii).

In the embodiment (viii), e is preferably 0.0017 or more, and preferably 0.02 or less. If e is too small, the resistance to electron migration is in some cases decreased. If e is too large, the swelling of the battery due to adsorption of moisture may occur.

The other points are the same as those in the embodiment (vii).

The lithium-transition metal composite oxide preferably contains iron in a content of 25 ppm or less, more preferably 20 ppm or less, and still more preferably 18 ppm or less. Too high a content of iron may in some cases cause internal short circuit of the battery.

The lithium-transition metal composite oxide, when containing magnesium, has an abundance ratio of magnesium on the surface of particles of 20% or more. The abundance ratio of magnesium on the surface of particles is more preferably 40% or more, and still more preferably 60% or more, and yet more preferably 80% or more.

If the abundance ratio of magnesium on the surface of the particles of the lithium-transition metal composite oxide is within the above-mentioned range, magnesium exists uniformly on the surface of the particles, so that excellent effect of suppressing the elution of the transition metal ions is obtained.

In the present invention, the state in which magnesium exists on the surface of the particles is not particularly limited.

In the present invention, the "abundance ratio of magnesium on the surface of the particles of lithium-transition metal composite oxide" can be obtained as follows.

First, a group of particles of a lithium-transition metal composite oxide is observed for the state of existence of magnesium on the surface of the particles using an electron probe microanalyzer (EPMA) equipped with a wavelength dispersive X-ray photospectrometer (WDX). Then, a part at which the amount of magnesium per unit area is largest (i.e., the magnesium peak is highest) in the visual field of observation is selected and a line analysis is performed along a line segment (for example, a line segment of 300 $\mu$m long) passing through this part. In this line analysis, the lengths of parts having peak values of 4% or more assuming that the above-mentioned part at which the amount of magnesium per unit area is largest has a peak value of 100% are summed and the sum is divided by the length of the line segment. Then, the quotient is defined as an "abundance ratio of magnesium on the surface of a particle of a lithium-transition metal composite oxide". Note that it is preferable that an average value of the "abundance ratio of magnesium on the surface of a particle of a lithium-transition metal composite oxide" obtained by repeating the line analysis a plurality of times (for example, 10 times) is used.

In the above-mentioned method, those parts at which the peak value of magnesium is less than 4% are deemed as parts where no magnesium is present since they greatly differ from the part at which the amount of magnesium per unit area is largest.

By the above-mentioned "abundance ratio of magnesium on the surface of a particle of a lithium-transition metal composite oxide", it can be expressed whether or not magnesium is present uniformly on the surface of the particles of the lithium-transition metal composite oxide.

In the positive electrode active material of the present invention, the (400) crystallite diameter (crystallite diameter in the (400) vector direction) of the lithium-transition metal composite oxide is preferably 600 to 1,200 Å. The (400) crystallite diameter is more preferably 700 Å or more and it is more preferably 1,100 Å or less.

Here, the term "crystallite" refers to a maximum set that is considered to be a single crystal, and the term "crystallite diameter" refers to the size of a crystallite.

Therefore, larger the crystallite diameter, more excellent crystallinity and less strain in the crystal structure. Note that in the lithium-transition metal composite oxide of the spinel structure as used in the present invention, the degree of regularity of unit lattice arrangement can be expressed by the (400) crystallite diameter as described below.

The (400) crystallite diameter of a lithium-transition metal composite oxide can be obtained by, for example, an X-ray diffraction method. The X-ray diffraction method can be performed under the conditions of, for example, a tube current of 100 mA and a tube voltage of 40 kV. The crystallite diameter can be calculated from diffraction peak ascribable to the (400) plane obtained by the X-ray diffraction method by the Scherrer equation expressed by the following equation (3).

$$D = K\lambda/(\beta cos\theta) \qquad (3)$$

In the equation, D represents the size of a crystallite (Å), K represents the Scherrer constant (that is 1.05 when β is calculated from the integral breadth), λ represents the wavelength of an X-ray source (1.540562 Å in the case of CuKα1), β represents the width (radian) of a diffraction ray due to the size of the crystallite, and θ represents a diffraction angle (degree).

It is preferred that the positive electrode active material of the present invention has a specific surface area of 0.2 to 1.2 m$^2$/g. The specific surface area is more preferably 0.25 m$^2$/g or more and it is more preferably 0.9 m$^2$/g or less. If the specific surface area is too small, the obtained battery has a decreased discharge capacity. If the specific surface area is too large, no battery having excellent cycle characteristics can be obtained. The specific surface area can be measured by a nitrogen gas adsorption method.

For the particle size distribution of the particles of the positive electrode active material of the present invention, it is preferable that the ratio of particles having a volume-based particle size of 50 μm or more be 10 vol% or less, more preferably 7 vol % or less, based on total particles.

Since controlling the particle size distribution of the particles in the above-described range inhibits coarse particles consisting of secondary aggregations to be contained, a positive plate coated surface having excellent smoothness can be obtained.

The positive electrode active material of the present invention can be produced by a method that is not particularly limited and includes, for example, the following (1) and (2).

(1) Preparation of a starting material mixture

The compounds described hereinbelow are mixed such that each constituent element can exist in a predetermined compositional ratio to obtain a starting material mixture. The compounds used for preparing the starting material mixture are selected depending on the elements that constitute the objective composition.

The method of mixing is not particularly limited and includes: a method in which powdered compounds are mixed as they are to obtain a starting material mixture; a method in which compounds made in the form of a slurry with water and/or organic solvent are mixed and dried to obtain a starting material mixture; a method in which aqueous solutions of the above-mentioned compounds are mixed to form precipitate, which then is dried to obtain a starting material mixture; and a method using two or more of these methods in combination.

Hereinafter, compounds that can be used for preparing a starting material mixture will be exemplified.

The lithium compound is not particularly limited and includes, for example, $Li_2CO_3$, $LiOH$, $LiOH \cdot H_2O$, $Li_2O$, $LiCl$, $LiNO_3$, $Li_2SO_4$, $LiHCO_3$, $Li(CH_3COO)$, lithium fluoride, lithium bromide, lithium iodide, and lithium peroxide. Among these are preferred $Li_2CO_3$, $LiOH$, $LiOH \cdot H_2O$, $Li_2O$, $LiCl$, $LiNO_3$, $Li_2SO_4$, $LiHCO_3$, and $Li(CH_3COO)$.

The manganese compound is not particularly limited and includes, for example, manganese metal, oxides (for example, $MnO_2$, $Mn_2O_3$, and $Mn_3O_4$), hydroxides, nitrates, carbonates ($MnCO_3$), chlorides (for example, $MnCl_2$), manganese iodide, manganese sulfate (for example, $MnSO_4$), and manganese nitrate. Among these are preferred manganese metal, $MnCO_3$, $MnSO_4$ and $MnCl_2$.

It is preferable to use manganese compounds having specified particle size distribution, more particularly those of which d10 is 5 to 25 μm, d50 is 7 to 40 μm, and d90 is 10 to 60 μm assuming that particle sizes of particles whose volume cumulative frequencies reach 10%, 50% and 90%, respectively, in the particle size distribution thereof are defined as "d10", "d50" and "d90", respectively. To obtain manganese compounds having such a particle distribution, a mortar, a ball mill, a vibration mill, a jet mill, etc. can be used. In addition, various classifying apparatus can be used.

The magnesium compound is not particularly limited and includes, for example, $MgO$, $MgCO_3$, $Mg(OH)_2$, $MgCl_2$, $MgSO_4$, $Mg(NO_3)_2$, $Mg(CH_3COO)_2$, magnesium iodide, and magnesium perchlorate. Among these are preferred $MgSO_4$ and $Mg(NO_3)_2$.

The boron compound is not particularly limited and includes, for example, $B_2O_3$ (melting point 460°C), $H_3BO_3$ (decomposition temperature 173°C), lithium-boron composite oxide, orthoboric acid, boron oxide, and boron phosphate. Among these are preferred $H_3BO_3$ and $B_2O_3$.

The halogen compound is not particularly limited and includes, for example, $NH_4F$, $NH_4Cl$, $NH_4Br$, $NH_4I$, $LiF$, $LiCl$, $LiBr$, $LiI$, $MnF_2$, $MnCl_2$, $MnBr_2$, $MnI_2$, hydrogen fluoride, fluorine oxide, hydrofluoric acid, hydrogen chloride, hydrochloric acid, chlorine oxide, chlorine oxyfluoride, bromine oxide, bromine fluorosulfate, hydrogen iodide, iodine oxide, and periodic acid. Among these are preferred $NH_4F$, $NH_4Cl$, $NH_4Br$, $NH_4I$, $LiF$, $LiCl$, $LiBr$, $LiI$, $MnF_2$, $MnCl_2$, $MnBr_2$, and $MnI_2$.

The sulfur compound is not particularly limited and includes, for example, $Li_2SO_4$, $MnSO_4$, $(NH_4)_2SO_4$, $Al_2(SO_4)_3$, $MgSO_4$, sulfides, sulfur iodide, hydrogen sulfide, sulfuric acid and its salts, and nitrogen sulfide. Among these are preferred $Li_2SO_4$, $MnSO_4$, $(NH_4)_2SO_4$, $Al_2(SO_4)_3$, and $MgSO_4$.

The sodium compound is not particularly limited and includes, for example, $Na_2CO_3$, $NaOH$, $Na_2O$, $NaCl$, $NaNO_3$, $Na_2SO_4$, $NaHCO_3$, and $CH_3COONa$.

The calcium compound is not particularly limited and includes, for example, $CaO$, $CaCO_3$, $Ca(OH)_2$, $CaCl_2$,

$CaSO_4$, $Ca(NO_3)_2$, and $Ca(CH_3COO)_2$.

Hereinafter, a suitable method for obtaining a starting material mixture will be described in more detail by taking as an example the positive electrode active material which is the lithium-manganese composite oxide containing magnesium and boron.

An aqueous solution containing predetermined compositional ratios of manganese ions and magnesium ions, which is prepared from the above-mentioned manganese compounds and magnesium compounds, is dripped in purified water while being stirred.

Then, an aqueous solution of ammonium hydrogen carbonate is dripped to precipitate manganese and magnesium to obtain a salt of manganese and magnesium. Note that alkali solutions such as an aqueous solution of sodium hydroxide, an aqueous solution of sodium hydrogen carbonate, an aqueous solution of potassium hydroxide, and an aqueous solution of lithium hydroxide may be used in place of the aqueous solution of ammonium hydrogen carbonate.

Next, the aqueous solution is filtered to collect the precipitate and the collected precipitate is washed with water and heat-treated. Thereafter, the precipitate is mixed with the above-mentioned lithium compounds and boron compounds to obtain the starting material mixture.

(2) Calcination and pulverization of the starting material mixture

Then, the starting material mixture is calcined. The temperature, time and atmosphere of calcination are not particularly limited and may be determined appropriately depending on the purpose.

The calcination temperature is preferably 650°C or higher, more preferably 700°C or higher. If the calcination temperature is too low, unreacted starting material remains in the resulting positive electrode active material so that in some cases it is impossible to make full use of the original characteristics of the positive electrode active material. In addition, the calcination temperature is preferably 1,100°C or lower, more preferably 950°C or lower. If the calcination temperature is too high, the particle size of the positive electrode active material may in some cases be too large so that the characteristics of the battery are decreased. Further, byproducts such as $Li_2MnO_3$ and $LiMnO_2$ tend to be easily produced, which may lead to a decrease in discharge capacity per unit weight, a decrease in cycle characteristics, and a decrease in operation voltage.

Generally, the calcination time is preferably 1 to 24 hours, more preferably 6 to 12 hours. If the calcination time is too short, dispersion reaction between starting material particles does not proceed. If the calcination time is too long, the calcination after the dispersion reaction has been approximately completed comes to naught and in some cases coarse particles are formed due to sintering.

The calcination atmosphere includes, for example, atmospheric gas, oxygen gas, mixed gases composed of one or more of these gases and an inert gas such as nitrogen gas or argon gas, an atmosphere of which the oxygen concentration (oxygen partial pressure) is controlled, and a weakly oxidizing atmosphere. Among these is preferred an atmosphere of which the oxygen concentration is controlled.

When calcination is performed in an atmosphere of which the oxygen concentration is controlled, the occurrence of oxygen deficiency in the resultant crystal structure can be prevented, so that powdered lithium-transition metal composite oxide having substantially no strain in the crystal and having a large (400) crystallite diameter can be produced.

Among the above-mentioned calcination atmospheres preferred is an oxidizing atmosphere having an oxygen concentration of 10 vol% or more. When calcination is performed in an oxidizing atmosphere having an oxygen concentration of 10 vol% or more, powder having a (400) crystallite diameter of 600 Å or more can be obtained.

In particular, an oxidizing atmosphere having an oxygen concentration of 18 vol% or more is preferable. When calcination is performed in an oxidizing atmosphere having an oxygen concentration of 18 vol% or more, sufficient oxygen is supplied into the crystal structure so that powder having a (400) crystallite diameter of 600 to 1,200 Å can be obtained.

After the calcination, the product may be pulverized by use of a mortar, a ball mill, a vibration mill, a pin mill, a jet mill, or the like to make powder having an objective particle size. As described above, calcination followed by pulverization makes the powder to have the specific surface area in the above-mentioned suitable range.

By the above-mentioned production method, the positive electrode active material of the present invention can be obtained.

The positive electrode active material of the present invention is used advantageously in nonaqueous electrolyte secondary batteries such as a lithium ion secondary battery and a lithium ion polymer secondary battery.

The nonaqueous electrolyte secondary battery just needs to use the positive electrode active material of the present invention as at least a portion of the positive electrode active material used in a conventional nonaqueous secondary battery, and other construction is not particularly limited. Hereinafter, the nonaqueous electrolyte secondary battery will be described in more detail by taking the lithium ion secondary battery as an example.

As the negative electrode active material, lithium metal, lithium alloys, or compounds that can occlude and release lithium ions can be used. The lithium alloys include, for example, LiAl alloys, LiSn alloys, and LiPb alloys. The compounds that can occlude and release lithium ions include, for example, carbon materials such as graphite and black lead, and oxides such as tin oxide and titanium oxide.

The electrolytic solution is not particularly limited so far as the solution is a compound that is not denatured or decomposed at an operating voltage.

The solvent includes, for example, organic solvents such as dimethoxyethane, diethoxyethane, ethylene carbonate, propylene carbonate, dimethyl carbonate, diethyl carbonate, ethyl methyl carbonate, methyl formate, $\gamma$-butyrolactone, 2-methyltetrahydrofuran, dimethyl sulfoxide, and sulfolane. These solvents may be used singly or two or more of them may be used in combination.

The electrolyte includes, for example, lithium salts such as lithium perchlorate, lithium tetrafluoroborate, lithium tetrafluorophosphate, and lithium trifluoromethanoate.

The above-mentioned solvent and electrolyte are mixed to prepare an electrolytic solution. Here, a gelling agent or the like may be added to the electrolytic solution in order to use the solution in the form of gel. Alternatively, the electrolytic solution may be used by being absorbed by a hygroscopic polymer. Further, inorganic or organic solid electrolytes having conductivity with lithium ions may also be used.

The separator includes, for example, porous membranes made of polyethylene or polypropylene.

The binder includes, for example, polyvinylidene fluoride, polytetrafluoroethylene, polyamide, and acrylic resins.

The positive electrode active material of the present invention as well as the above-mentioned negative electrode active material, electrolytic solution, separator and binder can be used to assemble a lithium ion secondary battery according to a conventional method.

A preferable method for producing a positive electrode with the positive electrode active material of the present invention will be described hereinbelow.

Powder of the positive electrode active material of the present invention is mixed with a carbon-based electroconductive agent such as acetylene black or black lead, a binder and a solvent or dispersant for the binder to prepare a positive electrode mixture. The obtained positive electrode mixture is converted into a slurry or kneaded product and coated or carried on a current collector such as an aluminum foil, followed by press-rolling to form a layer of the positive electrode active material on the current collector.

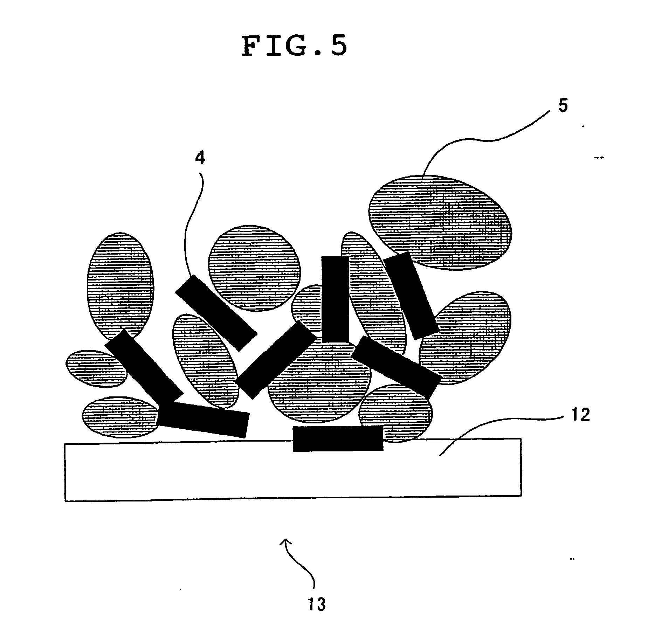

Fig. 5 is a schematic sectional view showing a positive electrode. As shown in Fig. 5, a positive electrode 13 is made of a current collector 12 holding thereon positive electrode active material 5 through binder 4.

The positive electrode active material of the present invention is considered to have excellent miscibility with the conductive agent powder, resulting in that the battery having the positive electrode active material has a low internal resistance. Therefore, the battery has excellent charge-discharge characteristics, in particular, an excellent discharge capacity.

Further, the positive electrode active material of the present invention has an excellent flowability even when the material is kneaded with binder, and is easily entangled with the polymer in the binder so that the material has excellent bindability.

Furthermore, the positive electrode active material of the present invention contains no coarse particles and is spherical so that the coated surface of the fabricated positive electrode has excellent smoothness. For this reason, the coated surface of the fabricated positive electrode has excellent bindability and thus becomes difficult to peel. In addition, since the surface is smooth and coming in and out of lithium ions on the coated surface accompanying charge and discharge occurs uniformly, a considerable improvement in the cycle characteristics can be seen.

The shape of the lithium ion secondary battery of the present invention is not particularly limited and may be made in the form of a cylinder, coin, square, laminate or the like.

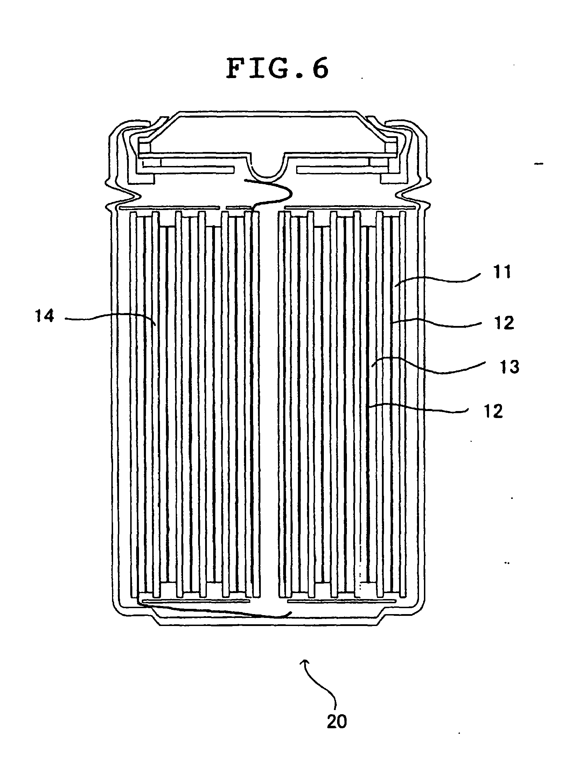

Fig. 6 is a schematic sectional view showing a cylinder type battery. As shown in Fig. 6, in a cylinder type battery 20, positive electrodes 13 which are made by forming layers of a positive electrode active material on current collectors 12, and negative electrodes 11 which are made by forming layers of a negative electrode active material on current collectors 12 are alternately laminated on one another through separators 14.

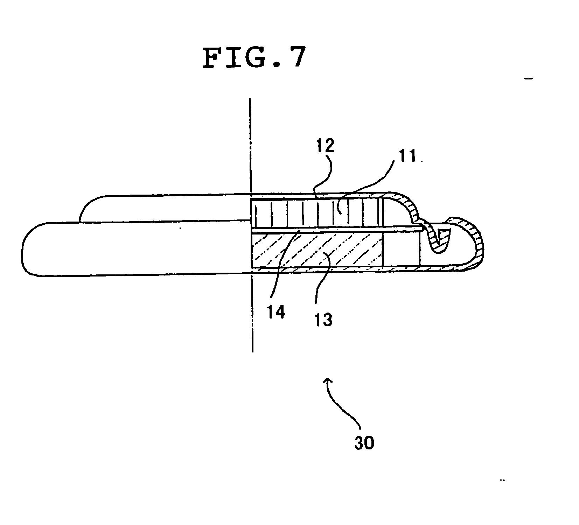

Fig. 7 is a schematic fragmentary sectional view showing a coin type battery. As shown in Fig. 7, in a coin type battery 30, a positive electrode 13 and a negative electrode 11 which is made by forming a layer of a negative electrode active material on current collectors 12 are laminated through a separator 14.

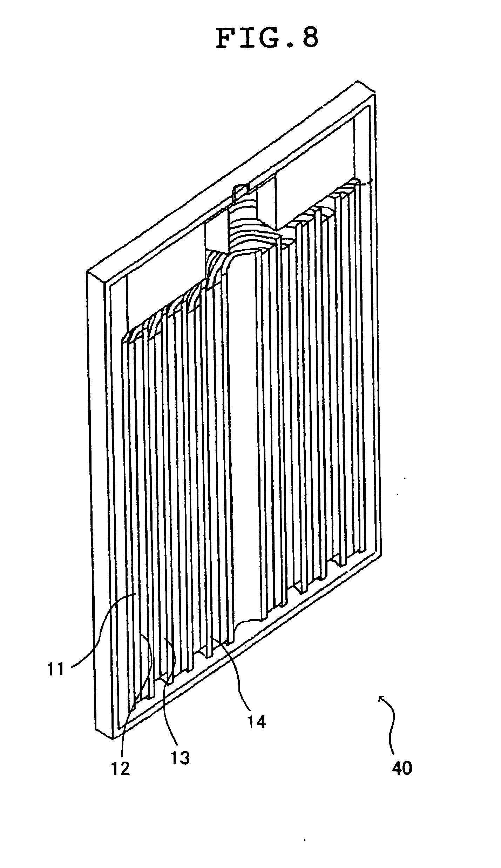

Fig. 8 is a schematic perspective view showing a square type battery. As shown in Fig. 8, in a square type battery 40, positive electrodes 13 which are made by forming layers of a positive electrode active material on current collectors 12, and negative electrodes 11 which are made by forming layers of a negative electrode active material on current collectors 12 are alternately laminated on one another through separators 14.

The nonaqueous electrolyte secondary batteries that use the positive electrode active material of the present invention are not particularly limited in their uses. For example, the batteries may be used as power supplies for equipment such as laptop personal computers, pen input personal computers, pocket personal computers, laptop word processors, pocket word processors, electronic book players, cellular phones, cordless phone hand-pieces, electronic notebooks, calculators, liquid crystal televisions, electric shavers, electrically powered tools, electronic translation machines, automobile telephones, mobile printers, transceivers, pagers, handy terminals, mobile copiers, audio input equipment, memory cards, backup power supplies, tape recorders, radios, headphone stereos, handy cleaners, portable compact disk (CD) players, video movies, navigation systems, and the like.

Further, the batteries may be used as power supplies for illuminating equipment, air-conditioners, televisions, stereos, hot water heaters, refrigerators, microwave ovens, dish washers, washing machines, driers, game equipment, toys, load conditioners, medical equipment, automobiles, electric automobiles, golf carts, electrically powered carts, electric power storage systems, and the like.

Further, the batteries are not limited to social uses and may be used in military or in space.

EXAMPLES

Hereinafter, the present invention will be described in more detail by way of examples. However, the present invention should not be considered as being limited thereto.

1. Preparation of positive electrode active materials

[Example 1]

Carbonate of manganese and magnesium having particle sizes whose volume cumulative frequencies reach 10%, 50% and 90% (d10, d50 and d90) are 11 $\mu$m, 14 $\mu$m, and 18 $\mu$m, respectively, in particle size distribution of the particles thereof was washed with water and dried, and then mixed with orthoboric acid and lithium carbonate. The obtained mixture was calcined at about 800°C for about 10 hours. The obtained calcined product was pulverized to obtain a positive electrode active material.

The obtained positive electrode active material had the composition: $Li_{1.09}Mn_{1.94}Mg_{0.01}B_{0.008}O_4$. The content of the sulfate group was 0.5 wt% based on the total weight of the lithium-transition metal composite oxide and the sulfate group. The content of Fe was 7 ppm based on the total weight of the lithium-transition metal composite oxide and Fe.

[Example 2]

A positive electrode active material was obtained in the same manner as in Example 1 except that the mixing ratios of carbonate of manganese and magnesium, orthoboric acid and lithium carbonate were changed.

The obtained positive electrode active material had the composition: $Li_{1.08}Mn_{1.94}Mg_{0.01}B_{0.005}O_4$. The content of the sulfate group was 0.4 wt% based on the total weight of the lithium-transition metal composite oxide and the sulfate group. The content of Fe was 2 ppm based on the total weight of the lithium-transition metal composite oxide and Fe.

[Example 3]

A positive electrode active material was obtained in the same manner as in Example 1 except that the mixing ratios of carbonate of manganese and magnesium, orthoboric acid and lithium carbonate were changed.

The obtained positive electrode active material had the composition: $Li_{1.05}Mn_{1.95}Mg_{0.01}B_{0.005}O_4$. The content of the sulfate group was 0.4 wt% based on the total weight of the lithium-transition metal composite oxide and the sulfate group. The content of Fe was 2 ppm based on the total weight of the lithium-transition metal composite oxide and Fe.

[Example 4]

A positive electrode active material was obtained in the same manner as in Example 1 except that the mixing ratios of carbonate of manganese and magnesium, orthoboric acid and lithium carbonate were changed.

The obtained positive electrode active material had the composition: $Li_{1.05}Mn_{1.95}Mg_{0.01}B_{0.008}O_4$.

[Example 5]

Carbonate of manganese and magnesium having d10, d50 and d90 of 23 $\mu$m, 31 $\mu$m, and 48 $\mu$m, respectively, was washed with water and dried, and then mixed with orthoboric acid and lithium carbonate. The obtained mixture was calcined at about 800°C for about 10 hours. The obtained calcined product was pulverized to obtain a positive electrode active material.

The obtained positive electrode active material had the composition: $Li_{1.08}Mn_{1.95}Mg_{0.01}B_{0.002}O_4$. The content of the sulfate group was 0.5 wt% based on the total weight of the lithium-transition metal composite oxide and the sulfate group. The content of Fe was 8 ppm based on the total weight of the lithium-transition metal composite oxide and Fe.

[Example 6]

A positive electrode active material was obtained in the same manner as in Example 5 except that the mixing ratios of carbonate of manganese and magnesium, orthoboric acid and lithium carbonate were changed.

The obtained positive electrode active material had the composition: $Li_{1.08}Mn_{1.95}Mg_{0.01}B_{0.003}O_4$. The content of the sulfate group was 0.5 wt% based on the total weight of the lithium-transition metal composite oxide and the sulfate group. The content of Fe was 5 ppm based on the total weight of the lithium-transition metal composite oxide and Fe.

[Example 7]

Carbonate of manganese and magnesium having d10, d50 and d90 of 20 $\mu$m, 29 $\mu$m, and 41 $\mu$m, respectively, was washed with water and dried, and then mixed with orthoboric acid and lithium carbonate. The obtained mixture was calcined at about 800°C for about 10 hours. The obtained calcined product was pulverized to obtain a positive electrode active material.

The obtained positive electrode active material had the composition: $Li_{1.08}Mn_{1.94}Mg_{0.01}B_{0.005}O_4$.

[Example 8]

Carbonate of manganese and magnesium having d10, d50 and d90 of 10 $\mu$m, 13 $\mu$m, and 18 $\mu$m, respectively, was washed with water and dried, and then mixed with orthoboric acid and lithium carbonate. The obtained mixture was calcined at about 800°C for about 10 hours. The obtained calcined product was pulverized to obtain a positive electrode active material.

The obtained positive electrode active material had the composition: $Li_{1.08}Mn_{1.94}Mg_{0.01}B_{0.005}O_4$. The content of the sulfate group was 0.4 wt% based on the total weight of the lithium-transition metal composite oxide and the sulfate group. The content of Fe was 5 ppm based on the total weight of the lithium-transition metal composite oxide and Fe.

Comparative Example 1

Manganese carbonate having d10, d50 and d90 of 9 $\mu$m, 12 $\mu$m, and 16 $\mu$m, respectively, was washed with water and dried, and then mixed with orthoboric acid, lithium carbonate and aluminum hydroxide. The obtained mixture was calcined at about 800°C for about 10 hours. The obtained calcined product was pulverized to obtain a positive electrode active material.

The obtained positive electrode active material had the composition: $Li_{1.08}Mn_{1.94}Mg_{0.04}B_{0.005}O_4$. The content of the sulfate group was 0.4 wt% based on the total weight of the lithium-transition metal composite oxide and the sulfate group. The content of Fe was 2 ppm based on the total weight of the lithium-transition metal composite oxide and Fe.

[Example 10]

A positive electrode active material was obtained in the same manner as in Example 8 except that the mixing ratios of carbonate of manganese and magnesium, orthoboric acid and lithium carbonate were changed.

The obtained positive electrode active material had the composition: $Li_{1.07}Mn_{1.94}Mg_{0.04}B_{0.005}O_4$. The content of the sulfate group was 0.4 wt% based on the total weight of the lithium-transition metal composite oxide and the sulfate group. The content of Fe was 16 ppm based on the total weight of the lithium-transition metal composite oxide and Fe.

[Comparative Example 2]

Manganese dioxide having d10, d50 and d90 of 0.4 $\mu$m, 9.6 $\mu$m, and 28.3 $\mu$m, respectively, lithium carbonate, magnesium carbonate, and orthoboric acid were mixed by the dry method to obtain powder of a starting material mixture. The obtained starting material mixture was calcined in an atmosphere of atmospheric air at 830°C for 11 hours. The obtained calcined product was pulverized to obtain a positive electrode active material.

The obtained positive electrode active material had the composition: $Li_{1.10}Mn_{1.93}Mg_{0.01}B_{0.0083}O_4$. The content of the sulfate group was 1.2 wt% based on the total weight of the lithium-transition metal composite oxide and the sulfate group. The content of Fe was 40 ppm based on the total weight of the lithium-transition metal composite oxide and Fe.

Note that in the above-mentioned Examples and Comparative Examples, the composition of the positive electrode active material was obtained by inductively coupled high-frequency wave-plasma spectrophotometry (ICP spectrophotometry). Further, the contents of the sulfate group and Fe were obtained by ICP spectrophotometry. 2. Properties of positive electrode active materials (1) Constitution of positive electrode active materials

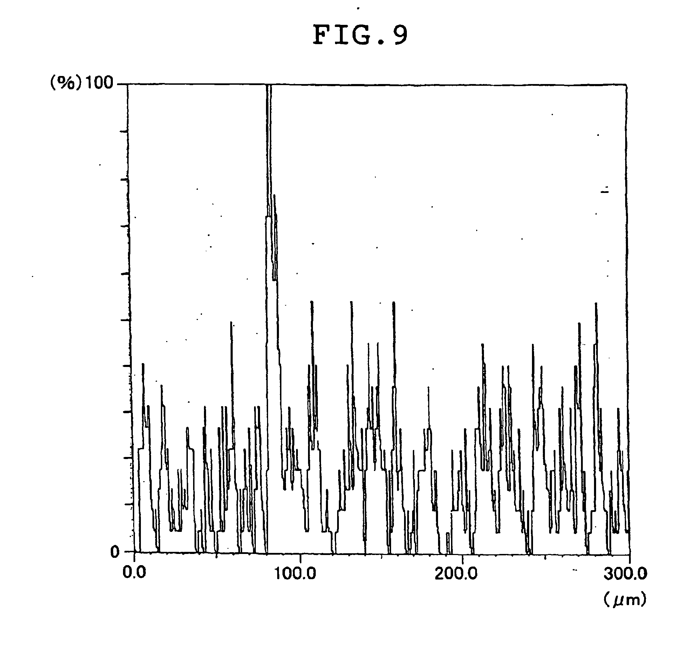

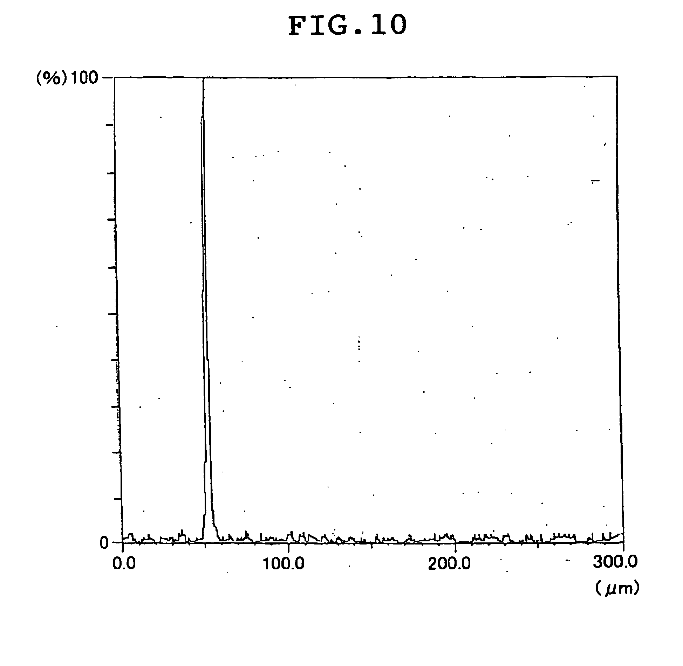

Line analysis was performed on the positive electrode active materials obtained in Example 1 and Comparative Example 2 by the above-mentioned method along a line segment of 300 μm in length using EPMA equipped with WDX. The results are shown in Figs. 9 and 10.

From Fig. 9, it can be seen that in the positive electrode active material obtained in Example 1, the state of existence of magnesium present on the surface thereof was uniform. The abundance ratio of magnesium on the surface of the particles of the lithium-transition metal composite oxide was 84.5 %.

From Fig. 10, it can be seen that in the positive electrode active material obtained in Comparative Example 2, the state of existence of magnesium present on the surface thereof is nonuniform (dispersed). The abundance ratio of magnesium on the surface of the particles of the lithium-transition metal composite oxide was 2.0 %.

(2) Mean absolute deviation of errors

The elemental analysis of the obtained positive electrode active material was performed using a particle analyzer "PT-1000" (manufactured by Yokogawa Electric Corporation), which can carry out an elemental analysis based on the luminescence voltage of each element. From the equations (1) and (2) described above, mean absolute deviations of errors of luminescence voltage values ascribable to the transition metal and lithium were obtained.

(3) Specific surface area and particle size distribution of positive electrode active material

The specific surface area of the obtained positive electrode active material was measured by a constant-pressure BET adsorption method using nitrogen gas.

The particle size distribution of the obtained positive electrode active material was measured by a laser diffraction scattering method and the D10, D50, D90, standard deviation of particle size and ratio of particles having a volume-based particle size of 50 μm or more were obtained.

(4) (400) crystallite diameter of positive electrode active material

The obtained positive electrode active material was subjected to an X-ray diffraction method. The X-ray diffraction method was performed using an X-ray diffraction apparatus (RINT 2500V, manufactured by Rigaku Electronics) and CuKαl as an X-ray source under the conditions of a tube current of 100 mA and a tube voltage of 40 kV. Based on the X-ray diffractive pattern obtained by the X-ray diffraction method, the (400) crystallite diameter of the positive electrode active material was accurately determined from Scherrer equation represented by the equation (3) described above.

(5) Mn Elution test of positive electrode active material

After the obtained positive electrode active material was dried at 110°C for 15 minutes, it was mixed with a electrolytic solution of 1 mol/L of LipF$_6$ in a mixed solvent of ethylene carbonate/diethyl carbonate = 3/7 and stored at 85°C for 48 days. After the mixture was filtered with a filter to remove the positive electrode active material, the elution amount of Mn (weight of Mn element to the weight of the electrolytic solution) was measured by ICP spectrophotometry. It can be said that the smaller the elution amount of Mn, the more excellent the storage stability of the positive electrode active material.

(6) Polar plate density of positive electrode active material

95 parts by weight of the positive electrode active material powder and a solution of polyvinylidene fluoride in n-methylpyrrolidone (5 parts by weight as polyvinylidene fluoride) were kneaded to prepare a paste, which was coated on an aluminum polar plate by a doctor blade method and the coated polar plate was dried to obtain a positive plate. The positive plate was cut to a predetermined size (5 cm$^2$) and the positive plate was pressed by a single axis pressing machine. From the thickness and weight of the positive plate after pressing, the polar plate density of the positive plate was calculated.

The results are shown in Table 1. Note that in Table 1, "-" means that the item concerned was not measured.

From Table 1, it can be seen that the positive electrode active material of the present invention had a low elution amount of Mn and excellent storage characteristics as compared with the positive electrode active material of Comparative Example 1. Further, it can be seen that the positive electrode active material of the present invention had a polar plate density identical to that of the positive electrode active material of Comparative Example 1.

Table 1

| | Mean absolute deviation of errors | D10/D50 | D90/D50 | D50 ($\mu$m) | Standard deviation of particle size | (400) Crystallite diameter (Å) | Specific surface area (m$^2$/g) | Ratio of particles having a volume-based particle size of 50 $\mu$m or more (%) | Elution amount of Mn (ppm) | Polar plate density (g/cm$^3$) |
|---|---|---|---|---|---|---|---|---|---|---|
| Example 1 | 0.20 | 0.8 | 1.3 | 13 | 0.11 | 934 | 0.4 | 0 | - | 2.6 |
| Example 2 | 0.18 | 0.8 | 1.3 | 13 | 0.10 | 876 | 0.5 | 0 | 53 | 2.6 |
| Example 3 | 0.18 | 0.8 | 1.3 | 12 | 0.10 | 984 | 0.5 | 0 | - | - |
| Example 4 | 0.16 | 0.8 | 1.3 | 14 | 0.11 | 958 | 0.4 | 0 | 25 | - |
| Example 5 | 0.19 | 0.3 | 1.7 | 17 | 0.35 | 790 | 0.7 | 3 | 34 | 2.9 |
| Example 6 | 0.20 | 0.5 | 1.4 | 20 | 0.21 | 822 | 0.5 | 2 | 63 | 2.9 |
| Example 7 | 0.18 | 0.7 | 1.3 | 20 | 0.14 | 714 | 0.3 | 2 | 57 | 2.8 |
| Example 8 | 0.16 | 0.8 | 1.3 | 12 | 0.10 | - | - | 0 | 56 | - |
| Comparative Example 1 | 0.21 | 0.8 | 1.3 | 11 | 0.10 | 774 | 0.7 | 0 | - | - |
| Example 10 | 0.19 | 0.8 | 1.3 | 11 | 0.10 | 869 | 0.7 | 0 | - | - |
| Comparative Example 2 | 0.27 | 0.3 | 2.5 | 19 | 0.35 | 837 | 0.3 | 8 | 64 | 2.8 |

3. Evaluation of positive electrode active material

Using the positive electrode active material obtained as described above, a secondary battery for a test of which the negative electrode was lithium metal, a secondary battery for a test of which the negative electrode was carbon, and a cylinder battery were fabricated and evaluated as described below.

A. Evaluation using a secondary battery for a test of which the negative electrode is lithium metal

The secondary battery for a test of which the negative electrode was lithium metal was fabricated as described below.

90 parts by weight of a positive electrode active material powder, 5 parts by weight of carbon powder serving as a conductive agent, and a solution of polyvinylidene fluoride in n-methylpyrrolidone (5 parts by weight as polyvinylidene fluoride) were kneaded to prepare a paste, which was coated on a positive electrode current collector and dried to obtain a positive plate. Using the obtained positive plate, a secondary battery for a test of which the negative electrode was lithium metal was fabricated.

(1) Initial discharge capacity

Under the conditions of a charging potential of 4.3 V, a discharging potential of 2.85 V, and a discharging load of 0.2 C (note that 1C is a current load at which the discharging is completed in 1 hour; the same is true hereinbelow), the secondary battery for a test of which the negative electrode was lithium metal was discharged. On this occasion, the discharge capacity was defined as a 0.2C initial discharge capacity.

Also, under the conditions of a charging potential of 4.3 V, a discharging potential of 3.0 V, and a discharging load of 0.24 C, the secondary battery for a test of which the negative electrode was lithium metal was discharged. On this occasion, the discharge capacity was defined as a 0.24C initial discharge capacity.

(2) Evaluation of swelling of at a terminal stage of discharging

Upon measuring the 0.2C initial discharge capacity, a change in capacity during discharging from 3.3 V to 2.85 V was measured and swelling at a terminal stage of discharging was evaluated. It can be said that the smaller the swelling at the terminal stage of discharging the more excellent the cycle characteristics.

(3) Initial efficiency

Under the conditions of a charging potential of 4.3 V, a discharging potential of 2.85 V, and a discharging load of 0.2 C, the secondary battery for a test of which the negative electrode was lithium metal was discharged. On this occasion, the value of discharge capacity was defined as an initial discharge capacity and the value of charge capacity was defined as an initial charge capacity. An initial efficiency was obtained by dividing the value of the initial discharge capacity by the value of the initial charge capacity.

(4) Load discharge capacity

Under the conditions of a charging potential of 4.3 V, a discharging potential of 2.85 V, and a discharging load of 2.0 C, the secondary battery for a test of which the negative electrode was lithium metal was discharged. On this occasion, the discharge capacity was defined as a load discharge capacity.

(5) Load efficiency (load capacity maintenance ratio)

Using a secondary battery for a test of which the negative electrode was lithium metal, an initial discharge capacity was measured under the conditions of a charging potential of 4.3 V, a discharging potential of 2.85 V, and a discharging load of 0.2 C, and then a load discharge capacity was measured under the conditions of a charging potential of 4.3 V, a discharging potential of 2.85 V, and a discharging load of 2.0 C. The value of the obtained load discharge capacity was divided by the value of the initial discharge capacity to obtain load efficiency at a discharging load of 2.0C was obtained.

Further, using a secondary battery for a test of which the negative electrode was lithium metal, an initial discharge capacity was measured under the conditions of a charging potential of 4.3 V, a discharging potential of 2.85 V, and a discharging load of 0.24 C, and then a load discharge capacity was measured under the conditions of a charging potential of 4.3 V, a discharging potential of 2.85 V, and a discharging load of 3.5 C. The value of the obtained load discharge capacity was divided by the value of the initial discharge capacity to obtain load efficiency at a discharging load of 3.5 C was obtained.

The results are shown in Table 2. Note that in Table 2, "-" means that the item concerned was not measured.

As will be apparent from Table 2, the positive electrode active material of the present invention have both an excellent initial discharge capacity and an excellent load discharge capacity, and both an excellent initial efficiency and an excellent load efficiency, as well as excellent cycle characteristics.

Table 2

| | Initial discharge capacity | | Swelling at a terminal stage of discharging (mAh/g) | Initial efficiency | Load discharge capacity | Load efficiency | |
|---|---|---|---|---|---|---|---|
| | 0.2C (mAh/g) | 0.24C (mAh/g) | | (%) | (mAh/g) | 2.0C/0.2C (%) | 3.5C/0.24C (%) |
| Example 1 | 115 | | 0.6 | 98 | 102 | 88 | |
| Example 2 | 115 | 115 | 0.5 | 99 | 112 | 98 | 95 |
| Example 3 | 122 | - | 1.4 | 97 | 112 | 91 | |
| Example 4 | 115 | - | 0.6 | 98 | - | - | - |
| Example 5 | 116 | - | 1.0 | 97 | 100 | 86 | - |
| Example 6 | 113 | - | 1.3 | - | 97 | 86 | - |
| Example 7 | - | - | 1.2 | - | 96 | 88 | - |
| Example 8 | - | 115 | - | 98 | - | - | 97 |
| Comparative Example 1 | - | 116 | - | 99 | - | - | 96 |
| Example 10 | - | 116 | - | 99 | - | - | 94 |
| Comparative Example 2 | 111 | 112 | 1.6 | 96 | 89 | 81 | 85 |

B. Evaluation using a secondary battery for a test of which the negative electrode is carbon

In the same manner as the case of the secondary battery for a test of which the negative electrode was lithium metal, a positive plate was obtained. Using the obtained positive plate, a secondary battery for a test of which the negative electrode was carbon was fabricated.

(1) Discharge capacity

43 cycles of charging and discharging of the secondary battery for a test of which the negative electrode was carbon was performed under the conditions of a charging potential of 4.2 V, a discharging potential of 2.75 V, and a discharging load of 0.2C. The discharge capacity after 43 cycles was measured.

(2) Swelling at a terminal stage of discharging

Upon the measurement of the discharge capacity after 43 cycles, a change in capacity during discharging from 3.3 V to 2.85 V was measured and the swelling at a terminal stage of discharging was evaluated. It can be said that the smaller the swelling at a terminal stage of discharging, the more excellent the cycle characteristics.

(3) Elution amount of Mn

After 43 cycles of charging and discharging were performed, the secondary battery for a test of which the negative electrode was carbon was disassembled and the negative electrode and separator were taken out. The Mn attached to the negative electrode and separator was dissolved and concentrated, followed by measurement of the elution amount of Mn (i.e., the weight of Mn dissolved from the negative electrode and separator) by an ICP spectrophotometry. It can be said that the smaller the elution amount of Mn, the more excellent the cycle characteristics and storage characteristics.

(4) Discharge capacity maintenance ratio after 43 cycles

Charging and discharging were repeatedly performed under the conditions of a charging potential of 4.2 V, a discharging potential of 2.75 V, and a discharging load of 1.0C and a discharge capacity was measured after 43 cycles. The value of the discharge capacity obtained after 43 cycles was divided by the value of the discharge capacity obtained after 1 cycle to obtain a discharge capacity maintenance ratio after 43 cycles and the cycle characteristics were evaluated.
The results are shown in Table 3. Note that in Table 3, "-" means that the item concerned was not measured.
From Table 3, it can be seen that the positive electrode active material of the present invention had excellent cycle characteristics and storage characteristics.

Table 3

| | Discharge capacity (mAh/g) | Swelling at a terminal stage of discharging (mAh/g) | Elution amount of Mn ($\mu$g) | Discharge capacity maintenance ratio after 43 cycles (%) |
|---|---|---|---|---|
| Example 1 | 108 | 4.2 | 90.0 | 93 |
| Example 2 | 110 | 2.2 | 105.0 | 96 |
| Example 3 | 110 | 6.4 | - | - |
| Example 4 | 109 | 2.7 | 90.0 | 94 |
| Example 5 | - | - | - | - |
| Example 6 | - | - | - | - |
| Example 7 | - | - | - | - |
| Example 8 | - | - | - | - |
| Comparative Example 1 | - | - | - | - |
| Example 10 | - | - | - | - |
| Comparative Example 2 | 102 | 6.7 | 112.5 | 92 |

C. Evaluation using a cylinder battery

A cylinder battery was fabricated as described below.
In the same manner as in the case of the secondary battery for a test of which the negative electrode was lithium metal, a positive plate was obtained. On the other hand, a carbon material was used as a negative electrode active material, which was coated on a negative electrode current collector and dried in the same manner as in the case of the positive plate to obtain a negative plate. A porous polypropylene film was used as a separator. A 1 mol/L solution obtained by having $LiPF_6$ dissolved in a mixed solvent of ethylene carbonate/methyl ethyl carbonate = 3/7 (volume ratio) was used as an electrolytic solution. The positive plate, negative plate and separator were formed into thin sheets, which were wound and accommodated into a metal cylindrical battery case. The electrolytic solution was injected into the battery case to obtain a cylinder battery of lithium ion battery.

(1) Discharge capacity maintenance ratio after 200 cycles

Charging and discharging were repeatedly performed under the conditions of a charging potential of 4.2 V, a discharging potential of 2.75 V, and a discharging load of 2C and a discharge capacity was measured after 200 cycles. The value of the discharge capacity obtained after 200 cycles was divided by the value of the discharge capacity obtained after 1 cycle to obtain a discharge capacity maintenance ratio and the cycle characteristics was evaluated.

(2) High temperature discharge capacity maintenance ratio

Charging and discharging were Repeatedly performed_at 60°C under the conditions of a charging potential of 4.2 V, a discharging potential of 2.75 V, and a discharging load of 2C and a discharge capacity was measured after 200 cycles. The value of the discharge capacity obtained after 200 cycles was divided by the value of the discharge capacity obtained after 1 cycle to obtain a high temperature discharge capacity maintenance ratio after 200 cycles and the high temperature cycle characteristics were evaluated.

(3) Load efficiency (Load capacity maintenance ratio)

After an initial discharge capacity was measured under the conditions of a charging potential of 4.2 V, a discharging potential of 2.75 V, and a discharging load of 0.2 C, a load discharge capacity was measured under the conditions of a charging potential of 4.2 V, a discharging potential of 2.75 V, and a discharging load of 2.0 C. The value of the obtained load discharge capacity was divided by the value of the initial discharge capacity to obtain load efficiency at a discharging load of 2.0C.

(4) Average potential

An initial discharge capacity and an electric power amount were measured under the conditions of a charging potential of 4.2 V, a discharging potential of 2.75 V, and a discharging load of 0.2 C. The value of the obtained electric power amount was divided by the value of the initial discharge capacity to obtain an average potential.
The results are shown in Table 4. Note that in Table 4, "-" means that the item concerned was not measured.
As will be apparent from Table 4, the positive electrode active material of the present invention have both excellent cycle characteristics and excellent high temperature cycle characteristics, as well as the high average potential under load and excellent load capacity maintenance ratio.

Table 4

|  | Discharge capacity maintenance ratio after 200 cycles (%) | High temperature discharge capacity maintenance ratio (%) | Load efficiency (%) | Average potential (V) |
|---|---|---|---|---|
| Example 1 | - | - | - | - |
| Example 2 | 85 | 60 | 97 | 3.77 |
| Example 3 | - | - | - | - |
| Example 4 | - | - | - | - |
| Example 5 | 90 | 57 | 94 | 3.82 |
| Example 6 | - | - | - | - |
| Example 7 | - | - | - | - |
| Example 8 | - | - | - | - |
| Comparative Example 1 | - | - | - | - |
| Example 10 | - | - | - | - |
| Comparative Example 2 | 82 | 47 | 85 | 3.73 |

**Claims**

1. A positive electrode active material for a nonaqueous electrolyte secondary battery having at least a lithium manganese composite oxide of the spinel structure,
   wherein the lithium-manganese composite oxide exists in a form of particles consisting of one or both of primary particles and secondary particles that are aggregations of the primary particles,

wherein provided that each of the particles is given a two-dimensional coordinate having as coordinate components cubic roots of luminescence voltage values ascribable to a manganese and lithium to represent the respective particles by points in a coordinate plane, and that a primary regression line passing an origin is obtained, a mean absolute deviation of an error of each of the points with respect to the primary regression line is 0.25 or less, wherein provided that particle sizes whose volume cumulative frequencies reaching 10%, 50% and 90%, respectively, are defined as D10, D50 and D90 in a particle size distribution of the particles, all of the following conditions are met:

$$0.1 \leq (D10/D50) < 1$$

$$1 < (D90/D50) \leq 3$$

$$5 \ \mu m \leq D50 \leq 40 \ \mu m,$$

wherein in a particle size distribution of the particles, a standard deviation of a particle size is 0.4 or less, wherein the lithium-manganese composite oxide is the lithium-manganese composite oxide represented by a general formula $Li_{1+e}Mg_bMn_{2-a-b}B_cO_{4+d}$, Where a represents a number that satisfies $-0.2 \leq a \leq 0.2$, b represents a number that Satisfies $0 < b \leq 0.2$, c represents a number that satisfies $0 \leq c \leq 0.02$, and d represents a number that satisfies $-0.5 \leq d \leq 0.5$, wherein a ratio of magnesium on a surface of particles of the composite oxide is 20 % or more.

2. The positive electrode active material for a nonaqueous electrolyte secondary battery according to claim 1, wherein (400) crystallite diameter of the lithium-transition metal composite oxide is 600 to 1, 200 Å.

3. The positive electrode active material for a nonaqueous electrolyte secondary battery according to any one of claims 1 to 2, wherein a specific surface area is 0.2 to 1.2 $m^2$/g.

4. The positive electrode active material for a nonaqueous electrolyte secondary battery according to any one of claims 1 to 3, wherein in a particle size distribution of the particles, a ratio of particles having a volume-based particle size of 50 $\mu$m or more is 10 vol% or less based on total particles.

**Patentansprüche**

1. Pluspol-Aktivmaterial für eine nichtwäßrige Elektrolytsekundärbatterie mit mindestens einem Lithium-Mangan-Verbundoxid mit Spinellstruktur,
wobei das Lithium-Mangan-Verbundoxid in Form von Teilchen vorliegt, die aus Primärteilchen und/oder Sekundärteilchen bestehen, die Aggregationen der Primärteilchen sind,
wobei wenn jedem der Teilchen eine zweidimensionale Koordinate verliehen wird, die als Koordinatenkomponenten Kubikwurzeln von auf Mangan und Lithium zurückzuführenden Lumineszenzspannungswerten hat, um die jeweiligen Teilchen durch Punkte in einer Koordinatenebene darzustellen, und wenn eine einen Ursprung durchlaufende primäre Regressionsgerade erhalten wird, eine mittlere absolute Abweichung eines Fehlers jedes der Punkte bezüglich der primären Regressionsgeraden höchstens 0,25 beträgt,
wobei wenn Teilchengrößen, deren Volumensummenhäufigkeiten 10 %, 50 % und 90 % erreichen, als D10, D50 bzw. D90 in einer Teilchengrößenverteilung der Teilchen definiert werden, sämtliche der folgenden Bedingungen erfüllt sind:

$$0,1 \leq (D10/D50) < 1$$

$$1 < (D90/D50) \leq 3$$

$$5\ \mu m\ \leq\ D50\ \leq\ 40\ \mu m,$$

wobei in einer Teilchengrößenverteilung der Teilchen eine Standardabweichung einer Teilchengröße höchstens 0,4 beträgt,
wobei das Lithium-Mangan-Verbundoxid durch die allgemeine Formel $Li_{1+a}Mg_bMn_{2-a-b}B_cO_{4+d}$ dargestellt ist, in der a eine Zahl ist, die $-0,2 \leq a \leq 0,2$ erfüllt, b eine Zahl ist, die $0 < b \leq 0,2$ erfüllt, c eine Zahl ist, die $0 \leq c \leq 0,02$ erfüllt, und d eine Zahl ist, die $-0,5 \leq d \leq 0,5$ erfüllt, wobei ein Anteil von Magnesium auf einer Oberfläche von Teilchen des Verbundoxids mindestens 20 % beträgt.

2. Pluspol-Aktivmaterial für eine nichtwäßrige Elektrolytsekundärbatterie nach Anspruch 1, wobei der (400)-Kristallitdurchmesser des Lithium-Übergangsmetall-Verbundoxids 600 bis 1200 Å beträgt.

3. Pluspol-Aktivmaterial für eine nichtwäßrige Elektrolytsekundärbatterie nach Anspruch 1 oder 2, wobei eine spezifische Oberfläche 0,2 bis 1,2 $m^2$/g beträgt.

4. Pluspol-Aktivmaterial für eine nichtwäßrige Elektrolytsekundärbatterie nach einem der Ansprüche 1 bis 3, wobei in einer Teilchengrößenverteilung der Teilchen ein Anteil von Teilchen mit einer volumenbasierten Teilchengröße von mindestens 50 $\mu$m höchstens 10 Vol.-% auf der Grundlage der gesamten Teilchen beträgt.

## Revendications

1. Matériau actif d'électrode positive pour batterie secondaire à électrolyte non aqueux contenant au moins un oxyde composite de lithium-manganèse de structure spinelle,
dans lequel l'oxyde composite de lithium-manganèse existe sous une forme de particules consistant en des particules primaires, ou en des particules secondaires qui sont des agrégations des particules primaires, ou en ces deux types de particules, dans lequel lorsque l'on attribue à chacune des particules une coordonnée bidimensionnelle présentant en tant que composants de coordonnée des racines cubiques de valeurs de tension de luminescence attribuables à un manganèse et à lithium pour représenter les particules respectives par des points dans un plan de coordonnées, et lorsque l'on obtient une droite de régression principale passant par une origine, un écart moyen absolu d'une erreur de chacun des points par rapport à la droite de régression principale est inférieur ou égal à 0,25,
dans lequel lorsque des tailles de particules dont les fréquences cumulées en volume atteignant respectivement 10 %, 50 % et 90 % sont définies par D10, D50 et D90 dans une répartition granulométrique des particules, toutes les conditions suivantes sont satisfaites :

$$0,1 \leq (D10/D50) < 1$$

$$1 < (D90/D50) \leq 3$$

$$5\ \mu m \leq D50 \leq 40\ \mu m,$$

dans lequel dans une répartition granulométrique des particules, un écart-type d'une taille de particule est inférieur ou égal à 0,4,
dans lequel l'oxyde composite de lithium-manganèse est l'oxyde de composite de lithium-manganèse représenté par une formule générale $Li_{1+a}Mg_bMn_{2-a-b}B_cO_{4+d}$, où a représente un nombre qui satisfait $-0,2 \leq a \leq 0,2$, b représente un nombre qui satisfait $0 < b \leq 0,2$, c représente un nombre qui satisfait $0 \leq c \leq 0,02$ et d représente un nombre qui satisfait $-0,5 \leq d \leq 0,5$, dans lequel un taux de magnésium sur une surface des particules de l'oxyde de composite est supérieur ou égal à 20 %.

2. Matériau actif d'électrode positive pour batterie secondaire à électrolyte non aqueux selon la revendication 1, dans lequel le diamètre de cristallite (400) de l'oxyde composite de lithium-métal de transition est de 600 Å à 1 200 Å.

3. Matériau actif d'électrode positive pour batterie secondaire à électrolyte non aqueux selon l'une quelconque des revendications 1 à 2, dans lequel une surface spécifique est de 0,2 m$^2$/g à 1,2 m$^2$/g.

4. Matériau actif d'électrode positive pour batterie secondaire à électrolyte non aqueux selon l'une quelconque des revendications 1 à 3, dans lequel dans une répartition granulométrique des particules, un taux de particules présentant une taille de particule basée sur le volume supérieure ou égale à 50 μm est inférieur ou égal à 10 % en volume sur la base de la totalité des particules.

# FIG.1

# FIG.2

# FIG.3

APPROXIMATE LINE

A

$d_1$

$d_2$

B

$H_1$

$H_2$

# FIG.4

# FIG.5

# FIG.6

14

11
12
13
12

20

# FIG.7

# FIG.8

11
12
13
14
40

# FIG.9

# FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6080510 A